(19) Europäisches Patentamt
European Patent Office
Office européen des brevets

(11) Publication number: **0 212 271**
**A2**

# (12) EUROPEAN PATENT APPLICATION

(21) Application number: **86109839.0**

(22) Date of filing: **17.07.86**

(51) Int. Cl.4: **G 11 B 7/26**

(30) Priority: **19.08.85 US 766991**

(43) Date of publication of application: **04.03.87 Bulletin 87/10**

(84) Designated Contracting States: **DE FR GB NL**

(71) Applicant: **EASTMAN KODAK COMPANY, Patent Department 343 State Street, Rochester New York 14650 (US)**

(72) Inventor: **Kaplan, Mark Steven, Kodak Park, Rochester New York 14650 (US)**
Inventor: **Molaire, Michel Frantz, Kodak Park, Rochester New York 14650 (US)**

(74) Representative: **Parent, Yves et al, Kodak-Pathé Département Brevets et Licences Centre de Recherches et de Technologie Zone Industrielle, F-71102 Chalon-sur-Saone Cédex (FR)**

## (54) Micro replication process.

(57) A method of replicating a master pattern comprising coating the master pattern with a layer of a radiation curable composition comprising as the radiation curable component, a compound having the structure

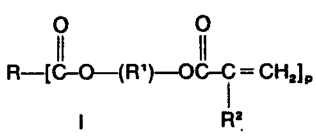

I

wherein R represents a cycloaliphatic or an aromatic group;

$R_1$ represents $-(CH_2)_n-$; $CH_2CH_2OCH_2CH_2-$ or

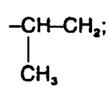

$R_2$ represents hydrogen or methyl;
n is 2 to 10;
p is 3 or 4; and
exposing the layer to actinic radiation thereby forming a negative image of the master pattern in the layer.

EP 0 212 271 A2

# MICRO REPLICATION PROCESS

## Field of the Invention

This invention relates to a method for replicating master patterns.

Recording elements bearing three-dimensional patterns of information requiring replication include optical and audio recording elements. Many optical recording elements are both video and audio. Such elements are described, for example, in U.S. Patent 4,380,769; U.S. Patent 4,446,223; and U.S. Patent 4,415,621 which discloses deformations formed in the recording layer of an amorphous material having an extremely high absorbency, in the form of pits or holes having sharply defined ridges, this recording layer having an absorption factor as high as possible, higher than 20 which is the value necessary to produce deformations readeable by a read beam which is not absorbed by the recording layer. These patents relate to so-called heat-deformable optical recording layers in which the deformation is in the form of a hole or depression ablated from the surface of a recording layer during the recording process. The spaced holes or depressions represent encoded information. A plurality of such deformations make up a pattern of the information stored on the disc.

For a variety of reasons, it is desirable to replicate patterns of information. European Patent Application 0118930, published September 19, 1984 discloses a method for replicating optical recording elements such as a Laser Vision Disc, and audio discs such as a Compact Disc. In the disclosed method, a mixture of light curable acrylates, particularly mono-, di-, tri-, or tetra-esters of acrylic acid, are used.

The light curable composition is coated onto a master and exposed to, for example, UV radiation. The light curable composition cures. It is

then removed from the master. The cured layer bears a negative replication of the information pattern on the master. This layer can be used as a submaster. The cured layer can be used to form positive replications by coatings on the negative submaster which may be metallized or otherwise treated to facilitate release of the cured composition.

The problem is, however, that the light cured acrylate compositions used in the above prior art lack flexibility. They are brittle and therefore subject to damage easily. Moreover, the mixture of acrylates in the light curable compositions makes quality control more difficult.

The object of this invention is to provide a method of replicating a master pattern in which the replication is flexible and ameliorates the problem of quality control.

The present invention achieves this object by providing a method of replicating a master pattern comprising

coating the master pattern with a layer of a radiation curable composition characterized in that the radiation curable component is a compound having the structure

$$\text{I} \qquad R{-}[\overset{O}{\overset{\|}{C}}{-}O{-}(R^1){-}O\overset{O}{\overset{\|}{C}}{-}\underset{R^2}{\underset{|}{C}}{=}CH_2]_p$$

wherein R represents a cycloaliphatic or an aromatic group;

$R^1$ represents $-(CH_2)_n-$ ; $-CH_2CH_2OCH_2CH_2-$ or $-\underset{CH_3}{\underset{|}{C}H}-CH_2-$;

$R^2$ represents hydrogen or methyl;

n is 2 to 10;

p is 3 or 4; and

exposing the layer to actinic radiation thereby forming a negative image of the master pattern in the layer.

Aromatic refers to a benzene, naphthalene, or anthracene nucleus.

The method of this invention represents an unexpected improvement over that of European Patent Application 0118930 in that photocured layers, formed from the compositions used in Applicants' method have more flexibility and are therefore less easily damaged. Moreover, quality control is less difficult since the compositions used in this invention are less complex, containing generally only one radiation curable component according to structure I.

In a particularly useful embodiment of the present invention, the radiation curable component of the radiation curable composition has a structure according to formula I

wherein R represents a "benzene or cyclohexane nucleus";

$R^1$ represents $-(CH_2)_n-$ ;

$R^2$ represents hydrogen or methyl; and

n is 2.

DETAILS OF THE INVENTION

The radiation curable component of the radiation curable composition useful in the method described herein and falling within the scope of formula I includes

TABLE I

1. 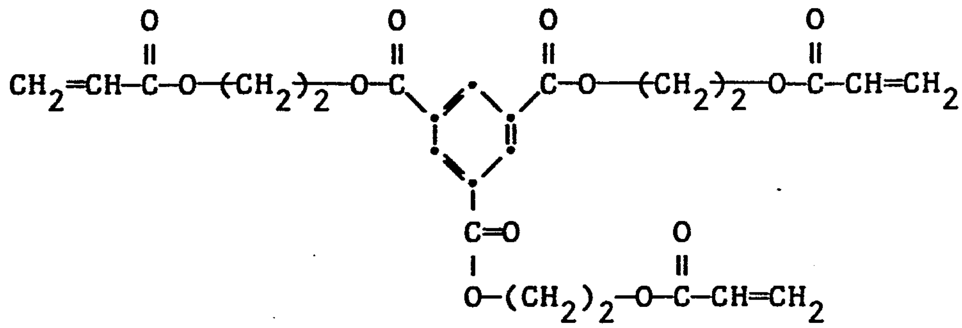

2. 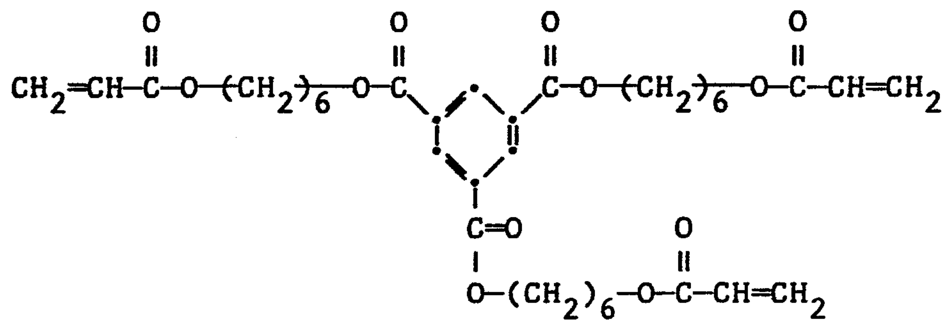

3. 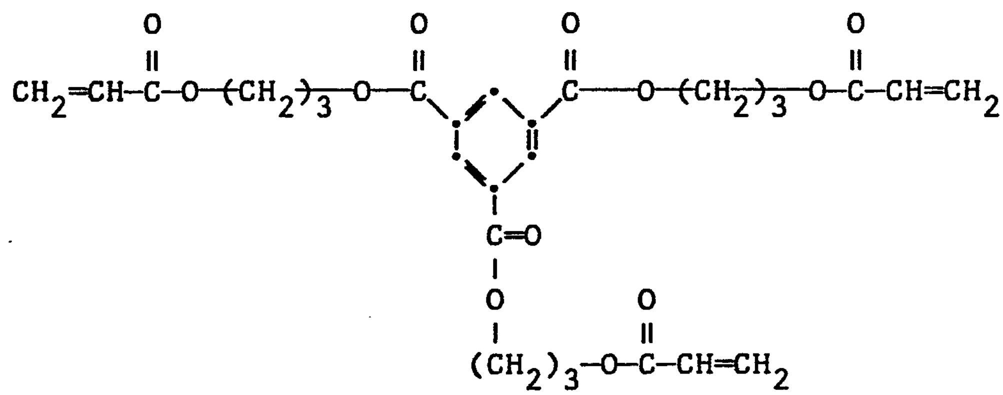

4. 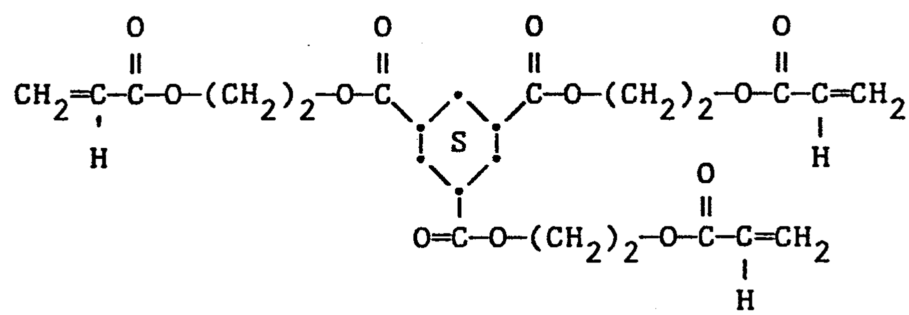

5. 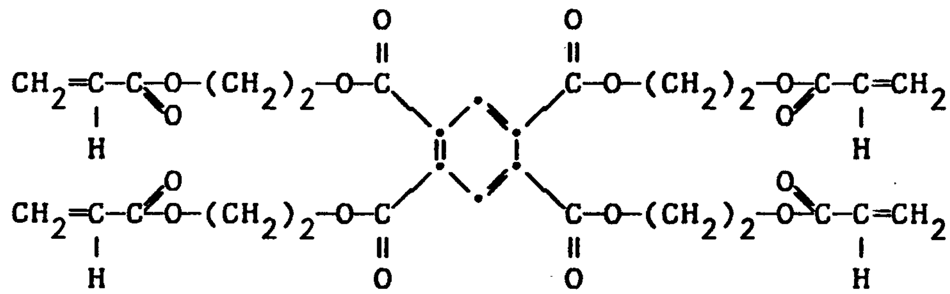

6. 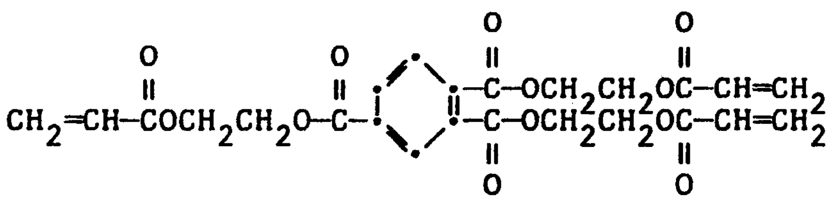

7. 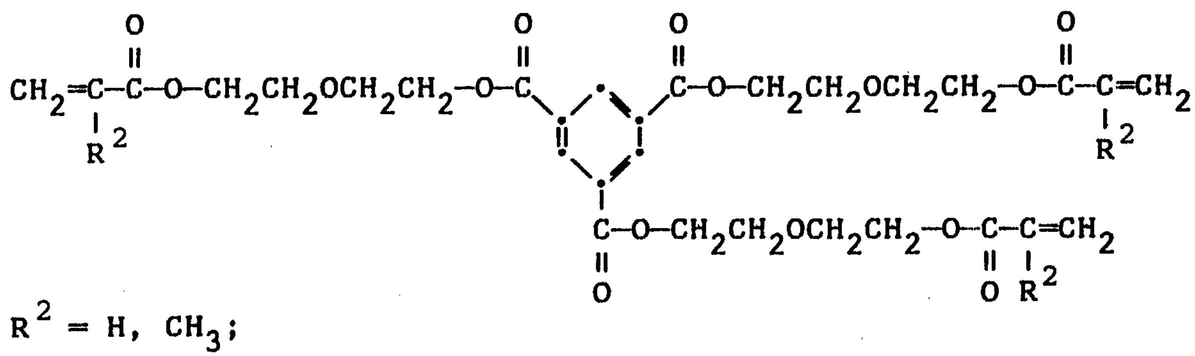

$R^2$ = H, $CH_3$;

The compounds of Table I are disclosed in U.S. Patent 4,322,490.

Useful radiation curable compositions, in addition to the radiation curable component represented by formula I, may also include a photoinitiator composition. The photoinitiator composition comprises, for example, an amine activator and a 3-ketocoumarin photosensitizer.

Any photoinitiator composition is useful in this invention. A mixture of Michler's ketone and benzophenone is useful. Other compositions comprising an amine activator and a 3-ketocoumarin photosensitizer are described in Research Disclosure, December 1980, Item 20036 entitled "Photopolymerizable Compositions Featuring Novel Co-Initiators". The amount of the photoinitiator composition does not appear to be critical. Amounts between about 0.0002 and 0.2 mmole/g of dry solids content are effective. Especially effective amounts are in the range of from about 0.001 to about 0.01 mmole/g.

The following is a list of representative coumarin photosensitizers highly useful as one of the components of the photoinitiator composition:

3-(2-benzofuroyl)-7-diethylaminocoumarin;
3-(2-benzofuroyl)-7-(1-pyrrolidinyl)coumarin;
3-benzoyl-7-diethylaminocoumarin;
3-(o-methoxybenzoyl)-7-diethylaminocoumarin;
3-(p-dimethylaminobenzoyl)-7-diethylaminocoumarin;
3,3'-carbonylbis(5,7-di-n-propoxycoumarin);
3,3'-carbonylbis(7-diethylaminocoumarin);
3-benzoyl-7-methoxycoumarin;
7-diethylamino-3-[3-(2-thienyl)acryloyl]coumarin;
3-(2-furoyl)-7-diethylaminocoumarin;
3-(p-diethylaminocinnamoyl)-7-diethylaminocoumarin;
7-methoxy-3-(3-pyridylcarbonyl)coumarin and
3-benzoyl-5,7-dipropoxycoumarin.

Representative useful amine activators above include ethyl p-dimethylaminobenzoate; other esters of p-dimethylaminobenzoic acid, e.g., n-butyl p-dimethylaminobenzoate, phenethyl p-dimethylaminobenzoate, 2-phthalimidoethyl p-dimethylaminobenzoate, 2-methacryloyloxyethyl p-dimethylaminobenzoate, pentamethylenebis(p-dimethylaminobenzoate); 4,4'-bis(dimethylamino)benzophenone; phenethyl and pentamethylene esters of m-dimethylaminobenzoic acid; p-dimethylaminobenzaldehyde; 2-chloro-4-dimethylaminobenzaldehyde; p-dimethylaminoacetophenone; p-dimethylaminobenzyl alcohol; ethyl(p-dimethylamino)benzoyl acetate; p-piperidinoacetophenone; 4-dimethylaminobenzoin; N,N-dimethyl-p-toluidine; N,N-diethyl-m-phenetidine; tribenzylamine; dibenzylphenylamine; N-methyl-N-phenylbenzylamine; p-bromo-N,N-dimethylaniline; tridodecylamine; and 4,4',4"-methylidynetris(N,N-dimethylaniline) (crystal violet, leuco base).

It is also possible to induce polymerization and crosslinking of the α,β-ethylenically unsaturated carbonyl substituted aliphatic and aromatic group with heat or using E beam energy without the use of a photoinitiator composition. Temperatures in the range of from 40° to 120°C are useful in promoting polymerization and crosslinking of the monomer.

The radiation curable compositions used in the method of the invention need only to contain a single radiation curable compound according to formula I to be operative as a microreplication material. On some occasions however, it may be desirable to tailor the viscosity of the radiation curable compositions to meet the specifications of

particular manufacturing processes and particular manufacturing equipment. Tailoring of viscosity can be achieved by blending a reactive diluent into the radiation curable composition. By reactive diluent we mean a low viscosity (1 to 100 mP.s) acrylic monomer capable of participating in the polymerization reactions without causing substantial speed loss.

The reactive diluent is a compound according to formula I wherein p is 1 or 2. Materials in which p is 1 are disclosed in U.S. Patent 4,322,490. The methods disclosed in this patent can also be used to make the divalent versions.

The radiation curable compositions are formulated in general by combining a formula I compound optionally with a sensitizer and mixing at an elevated temperature until a solution is obtained. Then an activator is added to the solution and mixed until a clear solution is obtained. When it is desired to tailor the viscosity, the reactive diluent is added. The order of combining the components is not critical. It is necessary, however, to obtain a clear solution.

In general, radiation curable compositions will comprise on a dry weight to weight percent basis, from 50 to 94 percent of the selected formula I monomer; from 2 to 10 weight percent of activator; and 1 to 5 weight percent of the photosensitizer. To adjust the viscosity, the radiation curable composition can comprise up to 50 weight percent of the reactive diluent.

The pattern replications made according to the method of this invention are useful for digital and video discs and other three-dimensional replicates.

The radiation curable compositions can be coated onto the master pattern using a variety of known procedures such as hand coating, whirl coating or air knife coating. The master pattern might reside on a variety of surfaces and be in a variety of formats including audio and video. The pattern is a plurality of microsurface deformations.

The coating composition may also contain a solvent such as dichloromethane, 2-ethoxyethanol, toluene, heptane and other suitable solvents to facilitate coating. After coating the master patterns with the radiation curable composition, any solvent used is allowed to evaporate to obtain a substantially solvent-free coated layer of the radiation curable composition.

The coated radiation curable layer is then exposed to actinic radiation. By actinic radiation, we refer to electromagnetic radiation to which the formula I monomer is sensitive or has been made sensitive by the use of a photoinitiator composition. The actinic radiation can be, for example, heat, E beam energy or UV light. The actinic radiation causes the formula I monomer and reactive diluent, if present, to polymerize and crosslink, thus, curing the layer. After the curing is complete, the layer is removed from the surface of the element bearing the master pattern. The method of this invention utilizing the aforedescribed radiation curable compositions will be useful in replicating patterns in the element in which the pattern is in the form of deformations such as holes or pits or any other deformation having relief and/or recessed characteristics representing encoded information both audio and visual.

The following examples are presented to further clarify how one skilled in the art can make the radiation curable compositions and use them in the replication method of this invention.

Example 1

A radiation curable coating composition was prepared containing the following components:

| Compound | Amount (g) |
| --- | --- |
| Compound 6, Table I as the photosensitive component | 48.0 |
| 2-acryloyloxyethyl benzoate as a reactive diluent | 12.0 |
| 3-benzoyl-5,7-dipropoxycoumarin as a sensitizer | 1.5 |
| ethyl p-dimethylaminobenzoate as an activator | 3.0 |

A solution was obtained as follows:

The sensitizer was added to the Table I compound and the reactive diluent in a bottle. The bottle was then placed in a water bath and ultrasonically mixed for 1-2 hours. The water bath temperature reached 118-120°F and the sensitizer dissolved. The activator was added. Mixing was continued for one hour resulting in a clear solution.

A 4.75" diameter (120.65 mm) plastic digital audio element having pits (features) of approximately micrometer size and 0.1 micrometer depth with approximately a 1.0 micrometer track pitch was metallized with 0.05 microns of copper or aluminum. Microscopy before and after metallization showed no topographic change. This disc was used as the master pattern.

A polymer spacer ring of approximately 0.20 mm (8 mil) thickness was placed near the outer diameter of the element and a layer of the radiation curable coating composition was poured around the disc. The composition was coated by placing a quartz glass cover sheet 4 mm thick on top of the disc and spacer ring thereby spreading the layer over the entire disc. A 1000 W Hg/Xe lamp with measured output of 15-30 mw/$cm^2$ near 365 nm was used to expose the coated composition for an arbitrary time of 7 minutes.

The metallized master disc could then be removed from the polymerized surface giving a tough, flexible polymer film containing an exact negative replica of the digital information contained in the master pattern. No distortions in the pits could be seen by microscopy up to 1400X magnification.

Example 2

The following radiation curable composition was prepared:

| Compound | Amount (g) |
|---|---|
| Compound 4, Table I | 60.0 |
| 3-benzoyl-5,7-dipropoxycoumarin | 1.5 |
| ethyl p-dimethylaminobenzoate | 3.0 |

The composition was mixed together as in Example 1, coated over the same master pattern and exposed similarly. When the master was removed from the tough flexible polymerized film an exact negative replica of the master pattern was obtained in the film. Again as in Example 1, no distortions of the pits were detected microscopically up to 1400X magnification.

Example 3

A radiation curable coating formulation was prepared containing

| Compound | Amount (g) |
|---|---|
| Compound 5, Table I | 20 |
| 3-benzoyl-5,7-dipropoxycoumarin | 0.5 |
| ethyl p-dimethylaminobenzoate | 1.0 |

A 120.65 mm diameter plastic digital audio disc having pits of approximately micrometer size and 0.1 micrometer depth with approximately 1 micron track pitch was metallized with 0.05 microns of aluminum. Nomarski microscopy before and after metallization showed no topographic change. This disc was used as the master pattern.

A polymer spacer ring of approximately 0.20 mm thickness was placed near the outer diameter of the disc and a band of the radiation curable formulation was poured around the disc. The liquid was spread out by placing a quartz glass cover sheet 4 mm thick on top of the disc and spacer ring. A 1000 W Hg/Xe lamp with measured output of 15-30 $mw/cm^2$ near 365 nm was used to expose the coated formulation for 12 minutes.

The metallized master disc could then be removed from the polymerized surface giving a polymer film containing an exact (inverse) replica of the digital information contained on the master disc. No distortions in the pits could be seen by Nomarski microscopy up to 1400X.

Example 4

A radiation curable coating formulation was prepared as in Example 3 except using 4 g of a monoacrylate reactive diluent, 2-acryloyloxyethyl

benzoate, with 16 g of Compound 5 from Table I. All other compounds and their formulations were the same as in Example 3. Microreplication was carried out as in Example 3 with similar results.

WHAT IS CLAIMED IS

1. A method of replicating a master pattern comprising

coating the master pattern with a layer of a radiation curable composition characterized in that the radiation curable component is a compound having the structure

I 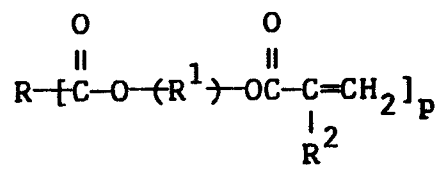

wherein R represents a cycloaliphatic or an aromatic group;

$R^1$ represents $-(CH_2)_n-$; $CH_2CH_2OCH_2CH_2-$ or 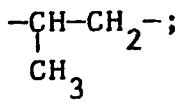;

$R^2$ represents hydrogen or methyl;

n is 2 to 10;

p is 3 or 4; and

exposing the layer to actinic radiation thereby forming a negative image of the master pattern in the layer.

2. The method of claim 1 wherein

R represents a benzene or cyclohexane nucleus;

$R^1$ represents $-(CH_2)_n-$ ;

$R^2$ represents hydrogen or methyl; and

n is 2.

3. The method of claim 1 wherein the radiation curable component is selected from the compounds of Table I herein.

4. The method of claim 1 wherein the radiation curable composition comprises a mixture of the radiation curable component according to structure I and a reactive diluent also having a structure according to structure I except that p is 1 or 2.

5. The method of claim 1 wherein the radiation curable component is

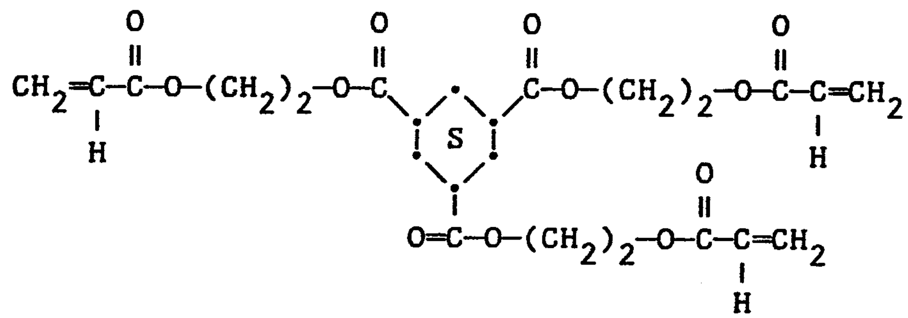

6. The method of claim 1 or 5 wherein the radiation curable composition comprises a mixture of 2–acryloyloxyethyl benzoate and

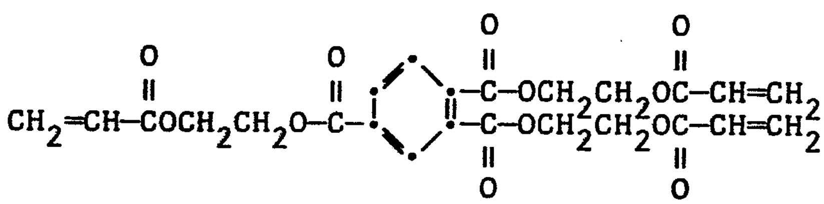

7. The method of claim 1 wherein the master pattern is in an optical recording element.

8. The method of claim 1 wherein the master pattern is in an amorphous optical recording layer of a dye and a binder and has a) an absorption factor of at least about 20 at a first wavelength and is substantially transparent at a second wavelength; and b) has a plurality of pits each of which comprises a hole or depression surrounded by a sharply defined ridge.

9. The method of claim 1 wherein the radiation curable composition comprises on a dry weight to weight basis 50 to 94 percent of the radiation curable component, from 0 to 50 percent of the reactive diluent, from 2 to 10 percent of the activator and from 1 to 5 percent of photoinitiator composition.

10. The method of claim 1 wherein the formula I compound is the sole radiation curable component in the radiation curable composition.

11. A replicate master pattern prepared by the process of any of claims 1 to 10.